# EUROPEAN PATENT SPECIFICATION

(11) **EP 1 918 183 B1**
(45) Date of publication and mention of the grant of the patent: **08.09.2010**
(21) Application number: 07020585.1
(22) Date of filing: 22.10.2007
(51) Int. Cl.: B62H 3/08

(54) **Device for facilitating the parking of motorcycles or the like, particularly for parking in tight spaces**
Vorrichtung zum Erleichtern des Parkens von Motorrädern und dergleichen, insbesondere zum Parken bei wenig Platz
Dispositif pour faciliter le garage de motocyclettes ou similaires, en particulier pour le garage dans des espaces restreints

(30) Priority: 31.10.2006 IT MI20062087
(43) Date of publication of application: 07.05.2008
(73) Proprietor: Borla, Ambrogio, 20070 Cerro al Lambro (MI) (IT)
(72) Inventor: Borla, Ambrogio, 20070 Cerro al Lambro (MI) (IT)
(74) Representative: Alagem Modiano, Lara S.

(56) References cited:
- DE-A1- 4 139 932
- DE-A1- 19 546 373
- FR-A- 2 765 849
- FR-A- 2 870 503
- GB-A- 2 344 572
- JP-A- 8 042 178
- JP-A- 2006 062 517

## Description

The present invention relates to a device for facilitating the parking of motorcycles or the like, particularly for parking in tight spaces.

Quite often, the motorcycle is, for its owner, an additional means of transport with respect to a car, to be used as an alternative to the car, particularly in summer. For this reason, the space reserved for parking it is generally found within a garage whose main purpose is to accomodate the car. Usually, the motorcycle is placed proximate to a wall of the garage, preferably the wall of the garage that lies opposite the main opening for accessing the garage, or at the access opening proper, and is arranged transversely to the direction of access to the garage or, if available, at recesses or niches on one of the walls of the garage.

For this reason, the space available to park the motorcycle is rather tight and quite often such space is only slightly longer than the motorcycle.

Parking motorcycles or the like in such particularly tight spaces is awkward, particularly if the motorcycle is quite heavy, since the motorcycle can move only in the direction of travel or along directions which are inclined with respect to the direction of travel allowed by the steering system of the motorcycle.

FR-A-2 870 503 discloses a device ad defined in the preamble of claim 1.

The aim of the present invention is to solve the problem described above by providing a device which allows to facilitate considerably the parking of motorcycles or the like even if the space available for parking is particularly tight and exceeds only slightly the longitudinal dimensions of the motorcycle.

Within this aim, an object of the invention is to provide a device which allows to park heavy motorcycles easily even in tight spaces.

Another object of the invention is to provide a device which is particularly simple to use and offers adequate assurances of safety for the user both during parking and during removal of the motorcycle.

Another object of the invention is to provide a device which can be installed very simply and rapidly.

This aim and these and other objects, which will become better apparent hereinafter, are achieved by a device for facilitating the parking of motorcycles or the like, as defined in claim 1.

Further characteristics and advantages of the invention will become better apparent from the description of a preferred but not exclusive embodiment of the device according to the invention, illustrated by way of non-limiting example in the accompanying drawings, wherein:
Figure 1 is a perspective view of the device according to the invention in a first operating condition;
Figure 2 is a perspective view of the device according to the invention in a second operating condition;
Figure 3 is a side elevation view of the device according to the invention in the operating condition shown in Figure 1 while a motorcycle is climbing onto the movable platform;
Figure 4 is a side elevation view of the device according to the invention in the operating condition shown in Figure 1, after a motorcycle has climbed onto the movable platform;
Figure 5 is a top plan view of the device according to the invention in the operating condition shown in Figure 1, with the motorcycle on the movable platform;
Figure 6 is a top plan view of the device according to the invention in the operating condition shown in Figure 2, with the motorcycle on the movable platform;
Figure 7 is a top plan view of the device according to the invention in the operating condition shown in Figure 2, in a different arrangement within a garage;
Figure 8 is an enlarged-scale sectional view of a detail of Figure 6, taken along the line VIII-VIII;
Figure 9 is an enlarged-scale sectional view of a detail of Figure 5, taken along the line IX-IX;
Figure 10 is a perspective view, in the operating condition shown in Figure 2, of a second embodiment of the device according to the invention;
Figure 11 is a side elevation view of the device according to the invention in the second embodiment shown in Figure 10, in the operating condition shown in Figure 1, with the motorcycle on the movable platform.

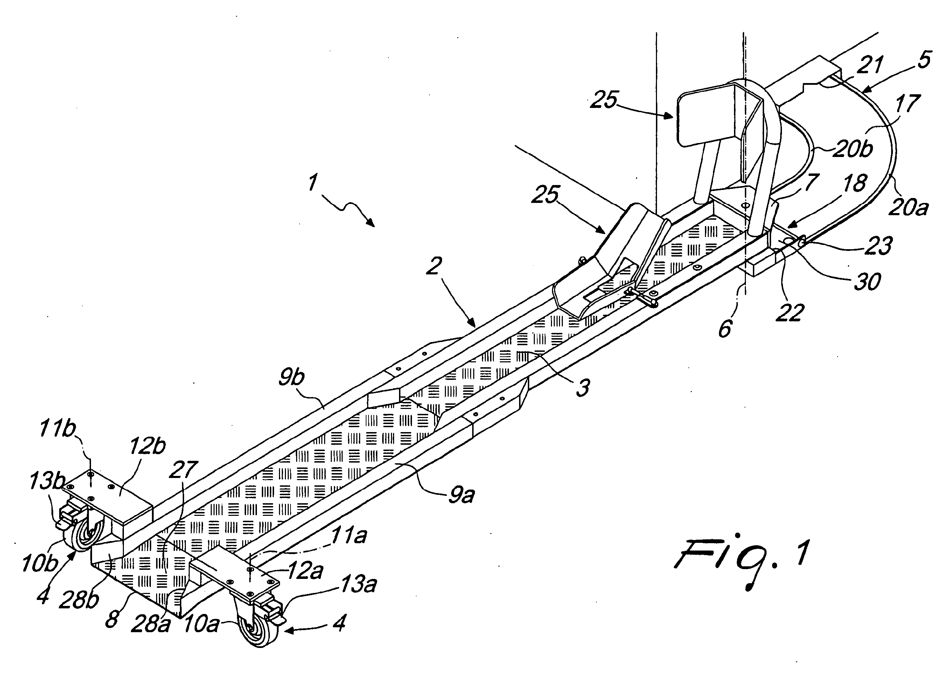

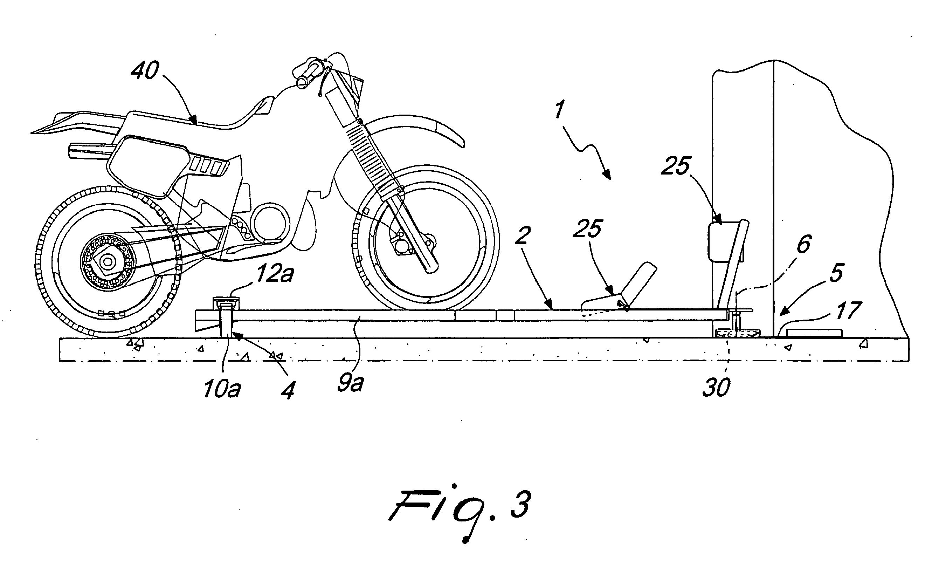

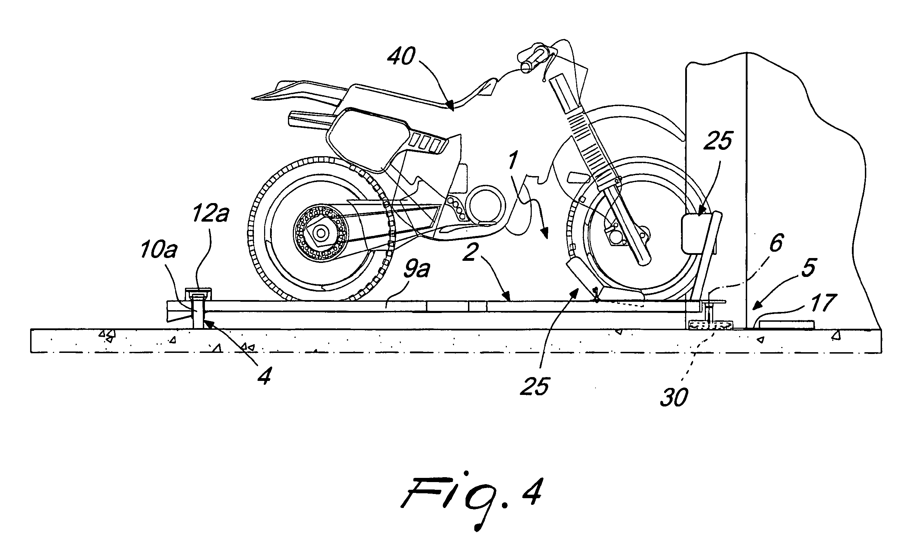

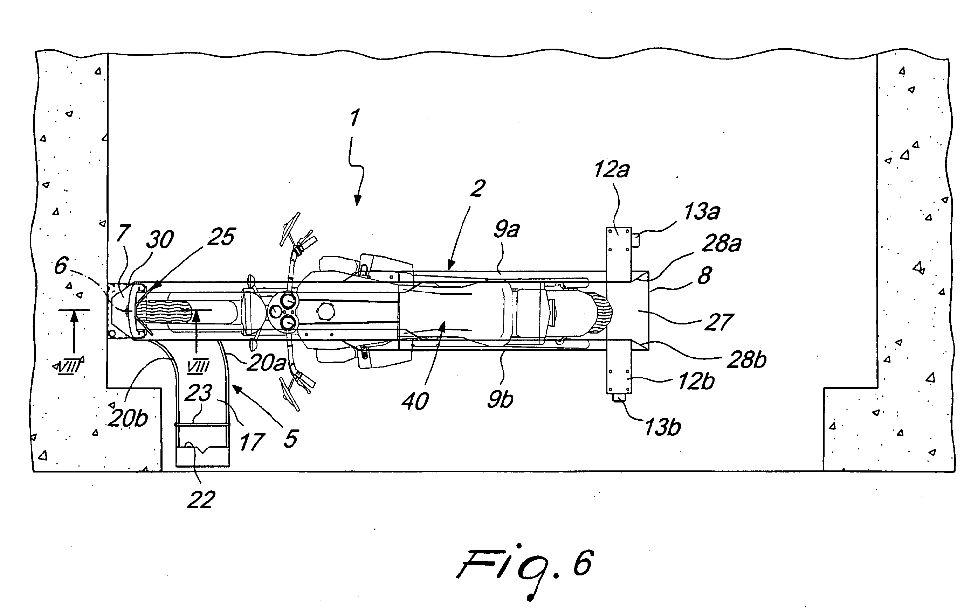

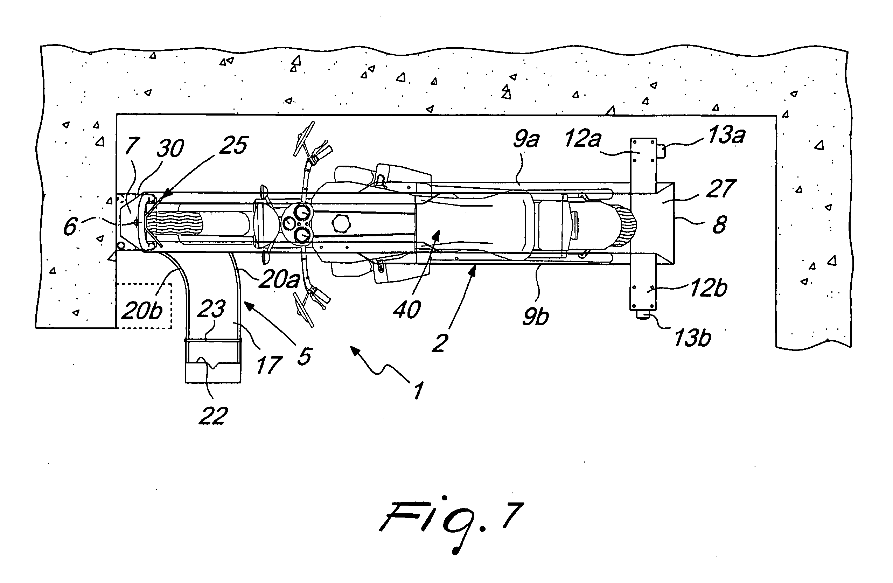

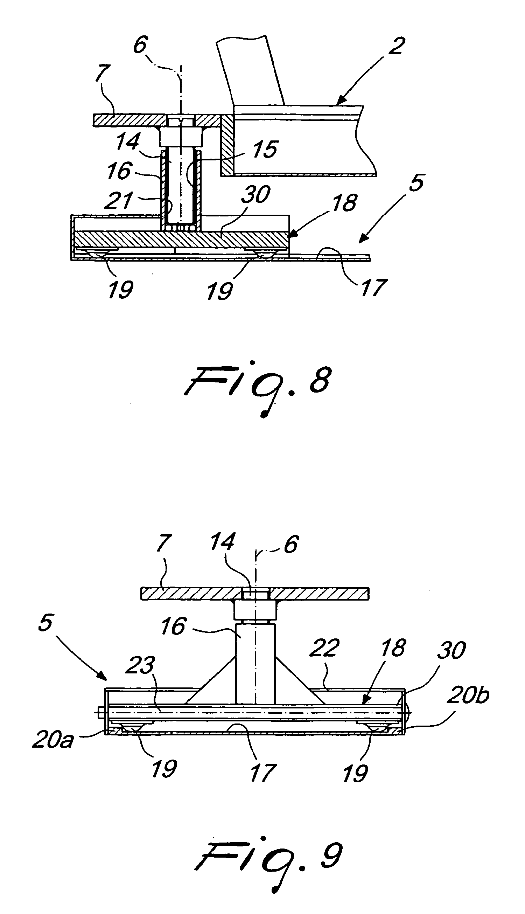

With reference to Figures 1 to 9, the device according to the invention, generally designated by the reference numeral 1, comprises an elongated movable platform 2 which defines a substantially horizontal supporting surface 3 for the motorcycle 40 to be parked (shown in phantom lines for the sake of greater clarity) and is provided with at least one ground support 4. The device comprises an anchoring element 5, which can be rested on or fixed to the ground or to a fixing element which is connected to the ground, and the movable platform 2 is connected to the anchoring element 5 at least so that it can rotate about a rotation axis 6 which is substantially vertical, so as to allow to vary the orientation of the movable platform 2 about the rotation axis 6 with respect to the anchoring element 5.

Preferably, the movable platform 2 is connected to the anchoring element 5 with its longitudinal end 7 which lies opposite the longitudinal end 8 for access to the movable platform 2 for the motorcycle 40.

The supporting surface 3, on which the wheels of the motorcycle 40 are designed to rest, is delimited laterally by two opposite longitudinal shoulders 9a, 9b, which protrude upwardly from the supporting surface 3 so as to contrast effectively an unwanted lateral descent of the motorcycle 40 from the movable platform 2.

The movable platform 2 can be provided, according to the requirements, monolithically or, as shown, in two portions which are assembled sequentially to each other along the longitudinal extension of the movable platform 2, for example by means of bolts or other known types of assembly means.

The ground support 4 for the movable platform 2 comprises at least one pair of casters 10a, 10b, which protrude downwardly from the movable platform 2 and are connected to the movable platform 2 preferably proximate to its longitudinal end 8, i.e., spaced from the rotation axis 6.

The casters 10a, 10b can be constituted by known types of casters, for example casters which turn around a corresponding vertical axis 11a, 11b and are connected to a pair of fins 12a, 12b which are fixed to the shoulders 9a, 9b and protrude laterally, on opposite sides, from the movable platform 2.

Conveniently, means are provided which can be activated or deactivated on command for locking at least one of the casters 10a, 10b. Such locking means can be constituted by a locking brake 13a, 13b of a known type, which is fitted to commercially available casters, for example casters for pieces of furniture, carts, or other types of casters.

The movable platform 2 has, at its longitudinal end 7, a pivot 14 which protrudes downwardly from the movable platform 2 and is oriented so that its axis, which defines the rotation axis 6, is perpendicular to the supporting surface 3. The pivot 14 is inserted coaxially within a rotation seat 15 which is defined in a bush 16.

The pivot 14 is coupled, so that it can rotate about the rotation axis 6, to the rotation seat 15, and optionally it is possible to provide, on the bottom of the rotation seat 15, against which the end of the pivot 14 rests, means adapted to reduce friction, such as for example balls of a bearing or a thrust bearing, between the pivot 14 and the rotation seat 15.

The anchoring element 5 can be constituted simply by a plate, which is designed preferably to be fixed to the ground for example by means of screw anchors or other known types of fixing means, or to a fixing element which in turn is fixed to the ground; the bush 16 is fixed to said plate so that the axis of the rotation seat 15 is arranged substantially vertically.

In this case, the movable platform 2 can simply rotate on a horizontal plane about the axis of rotation 6 with respect to the anchoring element 5, so as to allow to move the motorcycle 40, once it has been arranged on the movable platform 2, transversely to its longitudinal extension, thus facilitating the operation for parking the motorcycle 40 in tight spaces.

Preferably, as shown in the accompanying drawings, the anchoring element 5 comprises a base element 17, which can rest on the ground and optionally can be fixed to the ground by means of known types of screw anchors or other fixing elements, and a movement element 18, which is associated with the base element 17 and can move with respect to it along a movement path which is defined by said base element 17. The bush 16, in which the rotation seat 15 is provided, is fixed rigidly, for example by welding, to the movement element 18.

The movement element 18 comprises a truck 30, which can be constituted simply by a plate arranged on a substantially horizontal plane and rests on the substantially flat upper face of the base element 17 by means of casters or balls 19 which can rotate so as to facilitate the translational motion of the truck 30 with respect to the base element 17.

In practice, the upper face of the base element 17 defines a substantially horizontal gliding surface for the truck 30, and a movement path for the truck 30 is defined on such sliding surface and is delimited laterally by containment guides 20a, 20b for the truck 30, which protrude from the gliding surface at the sides of the base element 17.

The movement path, which is delimited laterally by the containment guides 20a, 20b, is also delimited at its longitudinal ends by stop shoulders 21, 22 for the truck 3 0.

The movement path is composed of at least two portions, which lie on a substantially horizontal plane and are inclined with respect to each other and are preferably substantially perpendicular to each other and conveniently radiused.

Advantageously, means are provided for locking the movement element 18 with respect to the base element 17. Such locking means comprise at least one locking pin 23, which can be inserted removably in locking seats 24 which are defined in the containment guides 20a, 20b and define a removable stop shoulder which is arranged opposite at least one of the stop shoulders 21, 22, so as to lock the truck 30 between the stop shoulder 21 and/or 22 and the removable stop element constituted by the locking pin 23, as will become better apparent hereinafter.

The anchoring element 5, by allowing the movable platform 2 not only to rotate about the rotation axis 6 but also to perform a translational motion along the movement path defined by the base element 17, allows to move the rotation axis 6 so as to allow the movable platform 2 to move past any lateral obstacles, such as for example pillars, or other obstacles which cannot be moved, or, as shown in Figures 1 to 6, the jamb of an opening for accessing a garage. This possibility, particularly if the device is fitted proximate to the opening for accessing a garage, allows if needed to clear substantially completely the access opening so as to allow the passage for example of a car through the access opening without having to remove the motorcycle 40 from the movable platform 2.

Preferably, the movable platform 2 is provided with means for removably locking the motorcycle 40 which is arranged on the movable platform 2. Such removable locking means can be constituted by clamps 25 of a known type for locking the front wheel of the motorcycle 40, which are assembled on the movable platform 2.

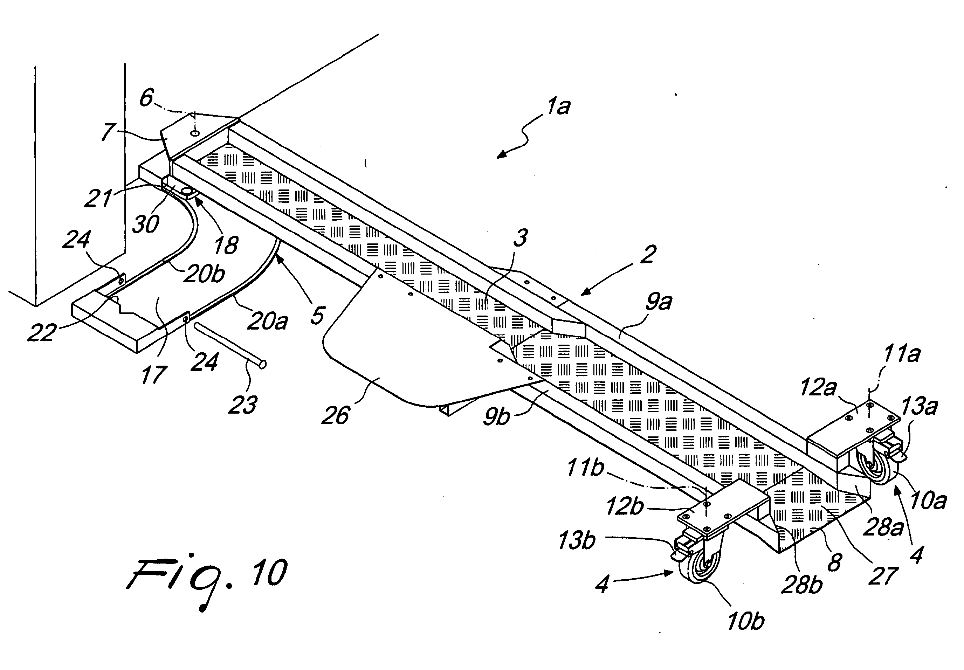

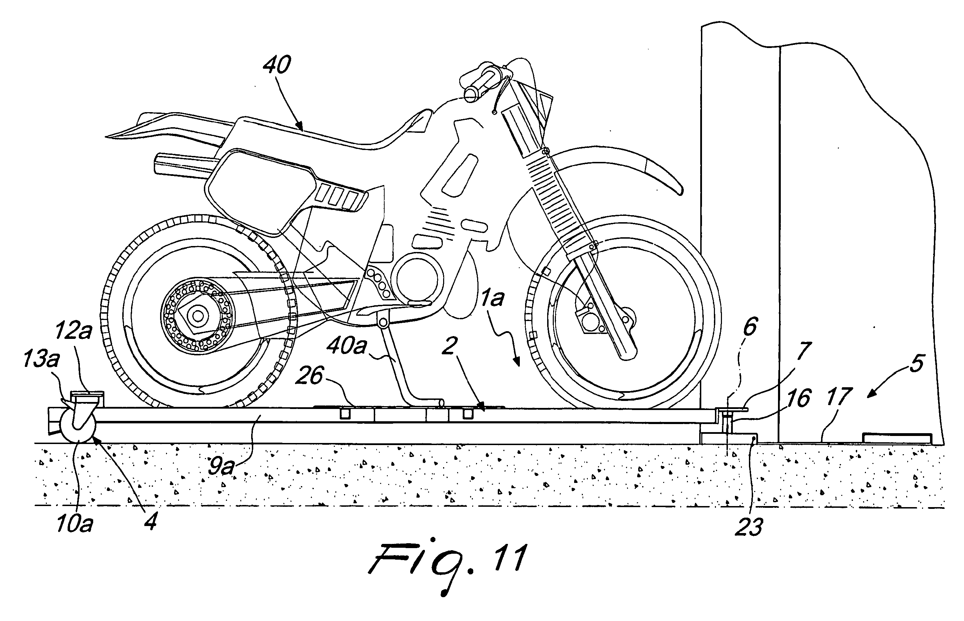

As an alternative, as shown in the embodiment of Figures 10 and 11, in which the device according to the invention has been designated generally by the reference numeral 1a, the movable platform 2 can be provided, in an intermediate region of its extension, with a lateral wing 26 which defines a substantially horizontal contact region for the lateral kickstand 40a of the motorcycle 40.

The embodiment shown in Figures 10 and 11, except for the lateral wing 26, corresponds substantially to the embodiment shown in Figures 1 to 9, and for this reason the elements of the device in this constructive variation that correspond to the elements of the device that have already been described with reference to Figures 1 to 9 have been designated by the same reference numerals.

The supporting surface 3, as a consequence of the pivoting between the movable platform 2 and the anchoring element 5 and of the contact on the ground of the movable platform 2 by means of the casters 10a, 10b, is raised from the ground and in order to facilitate access of the motorcycle 40 to the movable platform 2 and its exit from the movable platform 2, at the longitudinal end 8 there is a small ascent ramp 27 shaped like an inclined plane. Also to facilitate the access of the motorcycle 40 to the movable platform 2, at the longitudinal end 8 the shoulders 9a, 9b have guiding bevels 28a, 28b.

Use of the device according to the invention is as follows.

When the motorcycle 40 is to be parked, the movable platform 2, by taking advantage of its possibility to rotate about the rotation axis 6 and of the optional translational motion of the movement element 18 with respect to the base element 17, is arranged preferably at right angles to the position that it will have to assume once parking is complete. In this condition, shown in Figures 1, 3, 4, 5 and 11, the movement element 18 is arranged against the stop shoulder 22 and is locked by means of the insertion of the locking pin 23 in the locking seats 24.

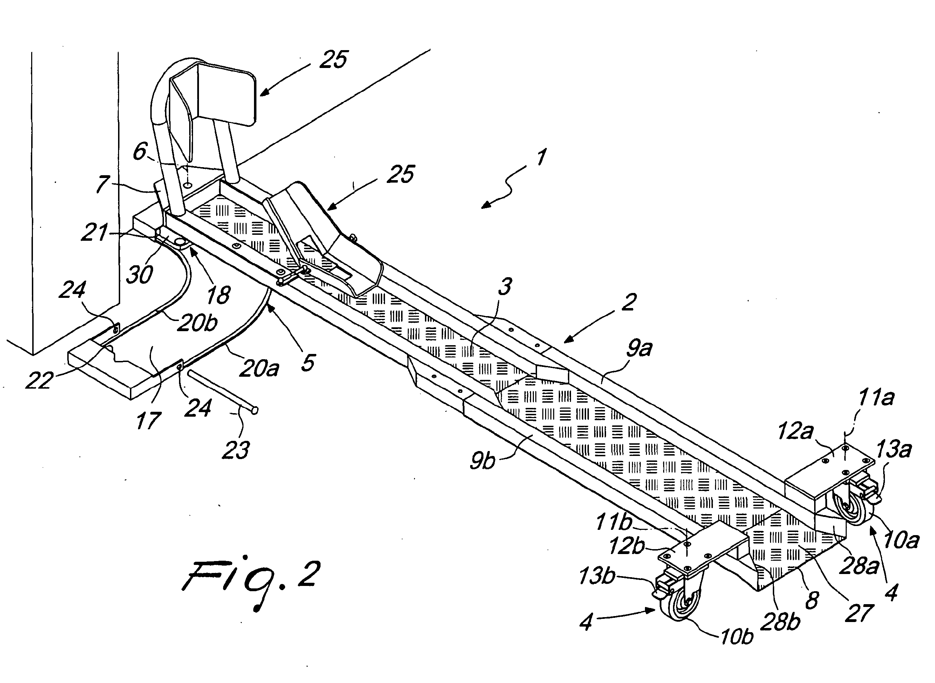

With the movable platform 2 in this position, and with the casters 10a, 10b optionally locked by activating the brakes 13a, 13b, the motorcycle 40 is pushed onto the movable platform 2 until the front wheel of the motorcycle 40 is proximate to the longitudinal end 7 of the movable platform 2, engaging the front wheel of the motorcycle with the clamp 25, or resting the kickstand 40a of the motorcycle 40 on the lateral wing 26. In this manner, the motorcycle 40 is positioned stably on the movable platform 2. At this point, the brakes 13a, 13b of the casters 10a and 10b are deactivated so as to allow to move freely the movable platform 2, taking advantage of its possibility to rotate about the rotation axis 6, and the locking pin 23 is extracted from the locking seats 24 in order to allow to take advantage also of the possibility of the movement element 18 to move along the base element 17. In this manner, the movable platform 2, and therefore the motorcycle 40 arranged on it, can be easily moved transversely in order to be placed in the final parking position even if the parking space is only slightly larger than the longitudinal space occupation of the motorcycle, as shown in Figures 2, 6, 7 and 10.

Once parking has been performed, at least one of the casters 10a, 10b can be locked by means of the corresponding brake 13a, 13b so as to lock the movable platform 2.

If one wishes to use the motorcycle, one proceeds in reverse with respect to what has been described in order to unload the motorcycle from the movable platform 2.

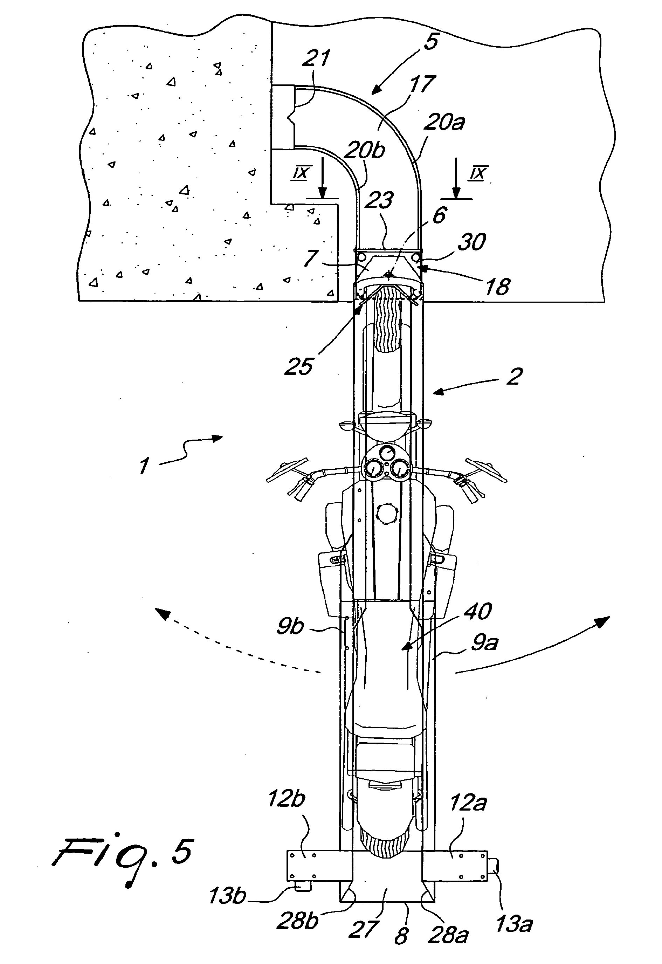

It should be noted that by taking advantage of the possibility of translational motion of the movement element 18 with respect to the base element 17 and of the possibility of the movable platform 2 to rotate with respect to the movement element 18 about the rotation axis 6, if the device is installed proximate to the access opening of a garage, as shown in particular in Figure 5, it is possible to extract the movable platform 2 from the garage and optionally turn it in the direction of the arrow shown in broken lines in Figure 5, so as to clear the opening for accessing the garage and allow the passage of a motor vehicle without the need to unload the motorcycle 40 from the movable platform 2.

In practice it has been found that the device according to the invention fully achieves the intended aim, since it allows to perform, simply and easily, the parking of motorcycles, even heavy ones, in spaces which are only slightly larger than the longitudinal space occupation of the motorcycle.

The device according to the invention further allows to park very precisely the motorcycle always in the same position within niches or recesses which are only slightly larger than the longitudinal space occupation of the motorcycle or adjacent to walls or at access openings, allowing to move the motorcycle quickly if needed.

An additional advantage of the device according to the invention is that it can be used conveniently while maintaining an upright posture, which is the most ergonomic and advantageous one.

The device thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) for facilitating the parking of motorcycles or the like, particularly for parking in tight spaces, comprising a movable platform (2) which has an elongated shape and defines a substantially horizontal supporting surface (3) for the motorcycle (40) to be parked and is provided with at least one ground support (4), and an anchoring element (5) which can be rested on or fixed to the ground or to a fixing element which is connected to the ground, said movable platform (2) being connected to said anchoring element (5) at least so that it can rotate about a substantially vertical rotation axis (6) in order to vary its orientation about said rotation axis (6) with respect to said anchoring element (5), said movable platform (2) being connected to said anchoring element (5) with its longitudinal end (7) that lies opposite the longitudinal end (8) for accessing said movable platform (2) and for exiting from said movable platform (2) for the motorcycle, said movable platform (2) having, at its longitudinal end (7) connected to said anchoring element (5), a pivot (14) which defines with its axis said rotation axis (6) and is coupled coaxially to a rotation seat (15) which is defined in said anchoring element (5), **characterized in that** said anchoring element (5) comprises a base element (17) which can rest on the ground and a movement element (18) which is associated with said base element (17) and can move with respect to said base element along a movement path defined by said base element (17); said rotation seat (15) being defined within said movement element (18).

2. The device according to claim 1, **characterized in that** said supporting surface (3) is delimited laterally by two opposite longitudinal shoulders (9a, 9b) which protrude upwardly from said supporting surface (3).

3. The device according to one or more of the preceding claims, **characterized in that** said ground support (4) of the movable platform (2) comprises at least one pair of casters (10a, 10b) which protrude downwardly from said movable platform (2) and are spaced from said axis of rotation (6).

4. The device according to one or more of the preceding claims, **characterized in that** it comprises locking means (13a, 13b), which can be activated or deactivated on command, for at least one of said casters (10a, 10b).

5. The device according to one or more of the preceding claims, **characterized in that** it comprises means for locking said movement element (18) with respect to said base element (17).

6. The device according to one or more of the preceding claims, **characterized in that** said movement element (18) comprises a truck (30) which can glide on a substantially horizontal gliding surface which is defined by said base element (17); said movement path being defined by guides (20a, 20b) for the lateral containment of said truck (30) which protrude from said gliding surface and being delimited at its longitudinal ends by shoulders (21, 22) for stopping said truck (30).

7. The device according to one or more of the preceding claims, **characterized in that** said movement path is composed of at least two portions which are mutually inclined and lie on a substantially horizontal plane.

8. The device according to claim 7, **characterized in that** said two portions of the movement path are substantially mutually perpendicular and are radiused.

9. The device according to one or more of the preceding claims, **characterized in that** said means for locking said movement element (18) with respect to said base element (17) comprise at least one locking pin (23) which can be inserted detachably in locking seats (24) which are defined in said containment guides (20a, 20b) and form a removable stop shoulder which is arranged opposite at least one of said stop shoulders (21, 22) to lock said truck (30) between one of said stop shoulders (21, 22) and said removable stop shoulder.

10. The device according to one or more of the preceding claims, **characterized in that** said movable platform (2) has, in an intermediate region of its extension, a lateral wing (26) which forms a substantially horizontal supporting region for the lateral kickstand (40a) of the motorcycle (40).

11. The device according to one or more of the preceding claims, **characterized in that** said movable platform (2) is provided with means for the removable locking of the motorcycle (40) arranged on said movable platform (2).

## Patentansprüche

1. Eine Vorrichtung (1) zum Erleichtern des Parkens von Motorrädern oder dergleichen, insbesondere zum Parken bei wenig Platz, die Folgendes umfasst: eine bewegliche Plattform (2), die eine lang gestreckte Form hat und eine im Wesentlichen horizontale tragende Oberfläche (3) für das zu parkende Motorrad (40) bestimmt und mit mindestens einer Bodenstütze (4) ausgestattet ist, und ein Verankerungselement (5), das am Boden oder an einem Befestigungselement, das mit dem Boden verbunden ist, aufgestützt oder befestigt werden kann, wobei die bewegliche Plattform (2) zumindest so mit dem Verankerungselement (5) verbunden ist, dass sie sich um eine im Wesentlichen vertikale Drehachse (6) drehen kann, um ihre Ausrichtung um die Drehachse (6) in Bezug zu dem Verankerungselement (5) zu verändern, wobei die bewegliche Plattform (2) mit dem Verankerungselement (5) mit ihrem Längsende (7) verbunden ist, das gegenüber dem Längsende (8) für den Zugang zu der beweglichen Plattform (2) und für das Verlassen der beweglichen Plattform (2) für das Motorrad liegt, wobei die bewegliche Plattform (2) an ihrem Längsende (7), das mit dem Verankerungselement (5) verbunden ist, einen Drehzapfen (14) hat, der mit seiner Achse die Drehachse (6) bestimmt und koaxial mit einem Drehsitz (15) gekoppelt ist, welcher in dem Verankerungselement (5) bestimmt ist, **dadurch gekennzeichnet, dass**
das Verankerungselement (5) ein Basiselement (17) umfasst, das auf dem Boden ruhen kann, und ein Bewegungselement (18), das mit dem Basiselement (17) verbunden ist und sich in Bezug zu dem Basiselement entlang einem Bewegungspfad bewegen kann, der von dem Basiselement (17) bestimmt wird, wobei der Drehsitz (15) innerhalb des Bewegungselements (18) bestimmt ist.

2. Die Vorrichtung gemäß Anspruch 1, **dadurch gekennzeichnet, dass** die tragende Oberfläche (3) seitlich von zwei gegenüberliegenden Längsschultern (9a, 9b) begrenzt wird, die von der tragenden Oberfläche (3) nach oben ragen.

3. Die Vorrichtung gemäß einem oder mehreren der obigen Ansprüche, **dadurch gekennzeichnet, dass** die Bodenstütze (4) der beweglichen Plattform (2) mindestens ein Paar von Gleitrollen (10a, 10b) umfasst, die von der beweglichen Plattform (2) nach unten ragen und von der Drehachse (6) beabstandet sind.

4. Die Vorrichtung gemäß einem oder mehreren der obigen Ansprüche, **dadurch gekennzeichnet, dass** sie für mindestens eine der Gleitrollen (10a, 10b) Verriegelungsmittel (13a, 13b) umfasst, die auf Befehl aktiviert oder deaktiviert werden können.

5. Die Vorrichtung gemäß einem oder mehreren der obigen Ansprüche, **dadurch gekennzeichnet, dass** sie Mittel zur Verriegelung des Bewegungselements (18) in Bezug zu dem Basiselement (17) umfasst.

6. Die Vorrichtung gemäß einem oder mehreren der obigen Ansprüche, **dadurch gekennzeichnet, dass** das Bewegungselement (18) ein Fahrgestell (30) umfasst, das auf einer im Wesentlichen horizontalen Gleitoberfläche gleiten kann, welche von dem Basiselement (17) bestimmt wird, wobei der Bewegungspfad von Führungen (20a, 20b) zur seitlichen Begrenzung des Fahrgestells (30) begrenzt wird, die aus der Gleitoberfläche herausragen und an ihren Längsenden von Schultern (21, 22) zum Anhalten des Fahrgestells (30) begrenzt werden.

7. Die Vorrichtung gemäß einem oder mehreren der obigen Ansprüche, **dadurch gekennzeichnet, dass** der Bewegungspfad aus mindestens zwei Abschnitten besteht, die zueinander geneigt sind und auf einer im Wesentlichen horizontalen Ebene liegen.

8. Die Vorrichtung gemäß Anspruch 7, **dadurch gekennzeichnet, dass** die zwei Abschnitte des Bewegungspfads im Wesentlichen rechtwinklig zueinander und gerundet sind.

9. Die Vorrichtung gemäß einem oder mehreren der obigen Ansprüche, **dadurch gekennzeichnet, dass** die Mittel zur Verriegelung des Bewegungselements (18) in Bezug zu dem Basiselement (17) mindestens einen Sperrstift (23) umfassen, der lösbar in Verriegelungssitze (24) eingeführt werden kann, welche in den Begrenzungsführungen (20a, 20b) bestimmt sind und eine lösbare Anschlagschulter bilden, die gegenüber mindestens einer der Anschlagschultern (21, 22) angeordnet ist, um das Fahrgestell (30) zwischen einer der Anschlagschultern (21, 22) und der lösbaren Anschlagschulter zu verriegeln.

10. Die Vorrichtung gemäß einem oder mehreren der obigen Ansprüche, **dadurch gekennzeichnet, dass** die bewegliche Plattform (2) in einem mittleren Bereich ihrer Ausdehnung einen seitlichen Flügel (26) hat, der einen im Wesentlichen horizontalen Stützbereich für den seitlichen Klappständer (40a) des Motorrads (40) hat.

11. Die Vorrichtung gemäß einem oder mehreren der obigen Ansprüche, **dadurch gekennzeichnet, dass** die bewegliche Plattform (2) mit Mitteln zur lösbaren Verriegelung des Motorrads (40), das auf der beweglichen Plattform (2) angeordnet ist, ausgestattet ist.

## Revendications

1. Dispositif (1) visant à faciliter le parking des motos ou autres véhicules de ce type, en particulier pour le parking dans des endroits exigus, comprenant une plateforme mobile (2) de forme allongée et présentant une surface de support sensiblement horizontale (3) pour la moto (40) à garer, et dotée d'au moins un support au sol (4), et d'un élément d'ancrage (5) pouvant reposer sur le sol ou y être fixé ou bien pouvant être fixé sur un élément de fixation raccordé au sol, ladite plateforme mobile (2) étant raccordée au dit élément d'ancrage (5) de façon à pouvoir au moins tourner autour d'un axe de rotation essentiellement vertical (6) afin de varier son orientation autour dudit axe de rotation (6) par rapport au dit élément d'ancrage (5), ladite plateforme mobile (2) étant raccordée au dit élément d'ancrage (5), son extrémité longitudinale (7) reposant à l'opposé de l'extrémité longitudinale (8) pour permettre à la moto d'accéder à ladite plateforme mobile (2) et pour lui permettre de quitter ladite plateforme mobile (2), ladite plateforme mobile (2) comportant, à son extrémité longitudinale (7) raccordée au dit élément d'ancrage (5), un pivot (14) qui définit avec son axe ledit axe de rotation (6) et est couplé dans le sens coaxial à un siège de rotation (15) défini dans ledit élément d'ancrage (5), **caractérisé par le fait que**
ledit élément d'ancrage (5) comprend un élément de base (17) pouvant reposer sur le sol et un élément de déplacement (18) associé au dit élément de base (17) et pouvant se déplacer par rapport au dit élément de base le long d'un trajet de déplacement défini par ledit élément de base (17) ; ledit siège de rotation (15) étant défini dans ledit élément de déplacement (18).

2. Dispositif selon la revendication 1, **caractérisé par le fait que** ladite surface de support (3) est délimitée latéralement par deux épaulements longitudinaux opposés (9a, 9b) qui dépassent vers le haut depuis ladite surface de support (3).

3. Dispositif selon une ou plusieurs des revendications précédentes, **caractérisé par le fait que** ledit support au sol (4) de la plateforme mobile (2) comprend au moins une paire de roulettes (10a, 10b) dépassant vers le bas de ladite plateforme mobile (2) et étant espacées dudit axe de rotation (6).

4. Dispositif selon une ou plusieurs des revendications précédentes, **caractérisé par le fait qu'**il comprend des moyens de verrouillage (13a, 13b), pouvant être activés ou désactivés sur commande, pour au moins l'une des roulettes (10a, 10b).

5. Dispositif selon une ou plusieurs des revendications précédentes, **caractérisé par le fait qu'**il comprend des moyens de verrouillage dudit élément de déplacement (18) par rapport au dit élément de base (17).

6. Dispositif selon une ou plusieurs des revendications précédentes, **caractérisé par le fait que** ledit élément de déplacement (18) comprend un chariot (30) pouvant glisser sur une surface de glissement essentiellement horizontale définie par ledit élément de base (17) ; ledit trajet de déplacement étant défini par des guides (20a, 20b) pour le maintien latéral dudit chariot (30) qui dépasse de ladite surface de glissement et étant délimité au niveau de ses extrémités longitudinales par les épaulements (21, 22) visant à arrêter ledit chariot (30).

7. Dispositif selon une ou plusieurs des revendications précédentes, **caractérisé par le fait que** ledit trajet de déplacement est composé d'au moins deux parties réciproquement inclinées et reposant sur un plan essentiellement horizontal.

8. Dispositif selon la revendication 7, **caractérisé par le fait que** lesdites deux parties du trajet de déplacement sont essentiellement réciproquement perpendiculaires et sont arrondies.

9. Dispositif selon une ou plusieurs des revendications précédentes, **caractérisé par le fait que** ledit moyen de verrouillage dudit élément de déplacement (18) par rapport au dit élément de base (17) comprend au moins une goupille de blocage (23) pouvant être insérée de façon amovible dans des supports de blocage (24) définis dans lesdits guides de maintien (20a, 20b) et formant un épaulement d'arrêt amovible placé à l'opposé d'au moins un desdits épaulements d'arrêt (21, 22) pour verrouiller ledit chariot (30) entre l'un desdits épaulements d'arrêt (21, 22) et ledit épaulement d'arrêt amovible.

10. Dispositif selon une ou plusieurs des revendications précédentes, **caractérisé par le fait que** ladite plateforme mobile (2) comporte, dans une partie intermédiaire de son prolongement, une aile latérale (26) formant un zone de support essentiellement horizontale par la béquille latérale (40a) de la moto (40),

11. Dispositif selon une ou plusieurs des revendications précédentes, **caractérisé par le fait que** ladite plateforme mobile (2) est équipée de moyens de verrouillage amovibles de la moto (40) placés sur ladite plateforme mobile (2).
